# EUROPEAN PATENT SPECIFICATION

(11) **EP 1 110 822 B1**
(45) Date of publication and mention of the grant of the patent: **21.07.2004**
(21) Application number: 00110538.6
(22) Date of filing: 17.05.2000
(51) Int. Cl.: B60R 16/00, B60J 5/04, B60R 16/02, B60Q 3/02

(54) **A door for a vehicle, in particular for a motor vehicle**
Fahrzeugtür, insbesondere für ein Motorfahrzeug
Porte pour véhicule, en particulier pour un véhicule à moteur

(30) Priority: 23.12.1999 IT TO991146
(43) Date of publication of application: 27.06.2001
(73) Proprietor: FIAT AUTO S.p.A., 10135 Torino (IT)
(72) Inventor: Jansen, Peter, 10045 Piossasco (IT); Bianco, Guido, 10045 Piossasco (IT)
(74) Representative: Eccetto, Mauro

(56) References cited:
- EP-A- 0 926 004
- DE-A- 19 724 486
- US-A- 5 647 657
- US-B1- 6 217 201
- PATENT ABSTRACTS OF JAPAN vol. 1995, no. 10, 30 November 1995 (1995-11-30) & JP 07 179148 A (BRIDGESTONE CORP), 18 July 1995 (1995-07-18)

## Description

The present invention relates to a door for a vehicle, in particular for a motor vehicle.

It is known that the side doors of a motor vehicle each include an outer body and an internal panel with pockets for holding small objects, a handle for opening the door and control devices, such as switches, for controlling certain functions in the vehicle, such as the window winders, the devices for orientating the external rear-view mirrors and the door-locking system.

Prior art doors of the above type house a lighting assembly for lighting the panel, and the control devices in particular, should external light be insufficient and include a plurality of incandescent lights wired to a power supply.

While prior art doors of the type described are widely used, they are not very satisfactory, since the lighting assembly is relatively complex and expensive.

A relatively high number of bulbs must be provided in order to light the door panel successfully and, in particular, at least one bulb for each control device with, in addition, a plurality of lights for illuminating the door handle, the storage compartments and the trim of the panel itself.

In general, each light requires an appropriate fitting and supply cable, meaning that each additional light increases the vehicle's electricity consumption on the one hand, while also increasing the manufacturing and assembly times and costs of the lighting assembly and the door respectively, owing, in particular, to the need to connect each light to the electrical system of the vehicle.

US 5,647,657 discloses a lighting system including a light source and a plurality of eight conductors transmitting light from the light source towards respective devices, while DE 19724486 discloses a decorating light guide.

The object of the present invention is to provide a door for a vehicle, in particular for a motor vehicle, which overcomes the problems described above both simply and economically.

This object is achieved according to the invention by providing a door for a vehicle, in particular a motor vehicle, as defined in claim 1.

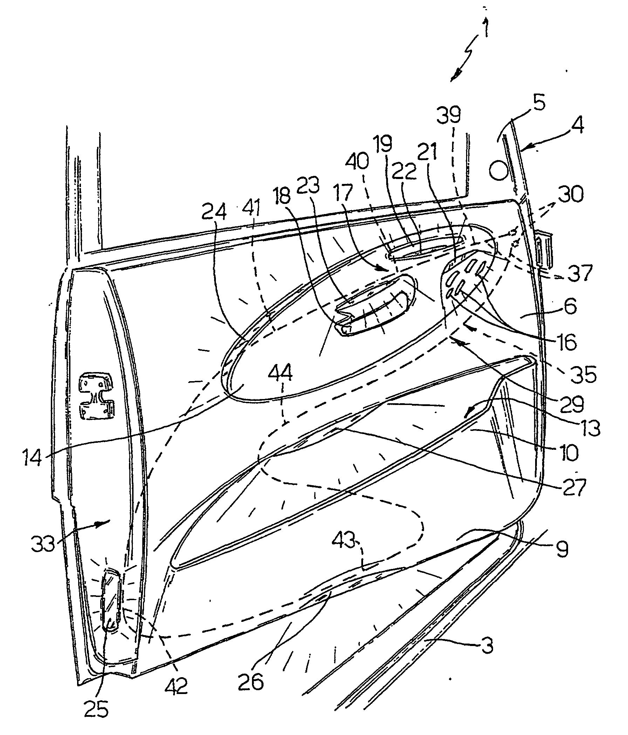

The invention will now be described with reference to the appended drawing, which shows a preferred, non-limitative embodiment of a door for a vehicle, in particular a motor vehicle, according to the present invention.

In the appended drawing, a motor vehicle, generally indicated 1, includes a passenger compartment delimited by a floor 3 (partially illustrated) at the bottom and a front side door 4 (partially illustrated).

The door 4 includes an outer body 5 and an internal panel 6 which includes a bottom portion 9 adjacent the floor 3, a storage pocket 10 formed above and adjacent the portion 9, with an access opening 13 at the top, and a substantially oval portion 14 arranged on the far side of the pocket 10 with respect to the portion 9.

The portion 14 has a plurality of switches 16, coated with inks or varnishes with light-reflecting properties, and which are preferably fluorescent, for controlling respective functions of the motor vehicle 1 such as, for example, the devices (not illustrated) for locking the doors, for orientating the external rear-view mirrors and for operating the window winders. The portion 14 also carries an inside handle 17 which includes a lever 18 for releasing the lock (not illustrated) of the door 4 and a grip portion 19 for using to closing the door 4 itself from inside the passenger compartment.

Still with reference to the appended drawing, the panel 6 has a plurality of light-permeable areas 21, 22, 23, 24, 25, 26, 27 defined, in the embodiment described, by respective apertures covered by sheets of transparent material. In particular, the areas 21, 22, 23 are formed in positions adjacent the switches 16, the grip portion 19 and the lever 18 respectively, while the area 24 extends around part of the curved outline of the portion 14 and the area 25 is formed in a rear surface 33 of the door 4 to indicate outside the vehicle 1 when the door 4 is open. Finally, the area 26 extends along the bottom edge portion 9 while the area 27 delimits the opening 13 of the pocket 10.

The door 4 includes a lighting assembly 29 for illuminating the panel 6 when lighting is low in the passenger compartment and includes in turn two substantially point-like light sources 30, defined, in particular, by LED-type light sources, housed in the panel 6 in positions adjacent each other and connected, in a known, and thus not illustrated, manner, to an electrical system (not illustrated) of the vehicle 1. The assembly 29 also includes an element 35 for guiding the light (illustrated by a broken line in the drawing), able to guide and emit the light generated by the sources 30 along an associated elongate, substantially annular path extending between the sources 30 themselves.

The element 35 is made of a material operable to convey the light between two points while lighting the path between the two said points, and is generally moulded from either a rigid or a flexible methacrylate.

The element 35 is fixed in position inside the panel 6 and includes two opposite end portions 37, each coupled to an associated source 30, with one intermediate portion 39 extending from a portion 37 adjacent the area 21, one intermediate portion 40 extending between the areas 22 and 23 and four intermediate portions, indicated 41, 42, 43 and 44 extending adjacent the areas 24, 25, 26 and 27 respectively.

In use, the act of switching on the headlights of the vehicle 1 turns on power to the two light sources 30 which generate respective beams of light guided along the appropriate paths by the element 35. The element 35 illuminates the path between the sources 30, guiding the light and emitting it diffusely both radially and along the entire path inside the panel 6.

The light passes through the areas 21, 22, 23, 24, 25, 26 and 27 and, in particular, the light from the portion 39 illuminates the switches 16, the light from the portion 40 illuminates the handle 17, while the area 24, illuminated by the portion 41, highlights the curved outline of the portion 14. In addition, the area 25, illuminated by the portion 42, indicates that the door 4 is open, the light emitted by the portion 43 illuminates a lower region of the passenger compartment, delimited by the floor 3, when the door 4 is shut, while the light from the portion 44 illuminates the pocket 10.

It is clear from the above that the assembly 29 for lighting the panel 6 is effective while being both simple and economical.

The assembly 29 includes only the two light sources 30 and the element 35 for guiding the light they emit, in contrast to prior art arrangements which call for a plurality of incandescent lights and relatively complex wiring for supplying electric power to the said lights.

The assembly 29 provides effective and uniform illumination without glare, thanks to the diffuse light emitted by the element 35, making it easy to locate the pocket 10, the handle 17 and the switches 16, while at the same time it makes the manufacture and assembly of the door 4 very competitive compared to those of the prior art.

Furthermore, thanks to the provision of only two light sources 30, arranged adjacent each other, the assembly 29 is very easy to connect to the electrical system of the motor vehicle 1, thereby keeping down the cost of repairing or replacing the said light sources 30, while the fact that the sources 30 consist of LED light sources keeps energy consumption down and also increases the life of the sources compared to those of the prior art, by preventing the wiring from overheating.

In addition, the appearance of the panel 6 and the passenger compartment is greatly enhanced, since the areas 21, 22, 23, 24, 25, 26 and 27 can be made curved and elongate, while the assembly 29 enables vehicles to be given differently coloured lighting simply by changing the colour of the light sources 30.

Finally, it is clear from the above that modifications and variations may be made to the panel as described, without departing thereby from the scope of the present invention defined by the appended claims.

In particular, the assembly 29 could have only one source 30 and/or include elements 35 extending along different paths from those described by way of example, partially or entirely outside the panel 6, for example, while the light-permeable areas 21, 22, 23, 24, 25, 26, 27 could be omitted or provided in a different quantity, in different positions and/or could be shaped differently from those illustrated.

Finally, the element 35 could be made of other materials than those stated, for example of a specially treated material used for the core of optical fibres, provided this was able to direct light emitted by the sources 30 along an elongate path.

## Claims

1. A door for a vehicle (1), in particular a motor vehicle, which includes:
- an outer body (5);
- an internal panel (6);
- a plurality of devices to be illuminated (16,17,14,25,26,10) carried by said panel (6), located in respective positions distributed along said panel (6) and comprising control means (16) operable to control relative functions of the said vehicle (1); and
- lighting means (29) for illuminating said devices (16,17,14,25,26,10); said lighting means (29) including at least one light source (30) and light-guide means (35) receiving light from said light source (30) and guiding the received light;
**characterised in that** said light-guide means (35) is defined by a single individual light conductor (35), which is elongated along a curvilinear light-guide path extending adjacent said devices (16, 17, 14, 25, 26, 10) and comprises a plurality of intermediate portions (39,40,41,42,43,44) aligned along said light-guide path and, each, radially emitting the guided light towards at least a respective device (16,17,14,25,26,10).

2. A door according to Claim 1, **characterised in that** the said light source (30) includes an LED light source.

3. A door according to Claim 1 or Claim 2, **characterised in that** it includes two light sources (30) fixed to opposite ends (37) of the said light-guide means (35).

4. A door according to any preceding Claim, **characterised in that** the said light-guide means (35) include at least a second portion (43) extending across a bottom portion of the said panel (6) for illuminating, in use, the surface of the road when the said door (4) is open, and a region delimited by the floor (3) of the said vehicle (1) when the said door is closed.

5. A door according to any preceding Claim, **characterised in that** the said panel (6) includes a storage pocket (10); with the said light-guide means (35) including at least a third portion (44) extending adjacent an area (27) delimiting the said storage pocket (10).

6. A door according to any preceding Claim, **characterised in that** it includes a rear light-permeable portion (25) for indicating outside the said vehicle (1) that the door (4) is open; the said light-guide means (35) including at least a fourth portion (42) extending adjacent the said rear portion (25).

7. A door according to any preceding Claim, **characterised in that** it includes an inside handle (17); the said light-guide means (35) including at least a fifth portion (40) adjacent the said handle (17).

8. A door according to any preceding Claim, **characterised in that** the said control means (16) include switches (16) coated with reflective material.

9. A door according to any preceding Claim, **characterised in that** the said light-guide means (35) extend along a substantially annular path.

10. A vehicle (1), in particular a motor vehicle, **characterised in that** it includes a door (4) manufactured according to any preceding Claim.

## Patentansprüche

1. Eine Tür für ein Fahrzeug (1), insbesondere für ein Motorfahrzeug, mit:
- einem äußeren Körper (5);
- einem Innenpaneel (6);
- einer Vielzahl von zu beleuchtenden Vorrichtungen (16, 17, 14, 25, 26, 10), die durch das Innenpaneel (6) getragen werden und an den jeweiligen Positionen des Innenpaneels (6) angeordnet sind, aufweisend betriebsbereite Steuerungsmittel (16) zur Steuerung relativer Funktionen des Fahrzeugs (1); und
- Beleuchtungsmittel (29) zur Beleuchtung der Vorrichtungen (16, 17, 14, 25, 26, 10), wobei die Beleuchtungsmittel (29) mindestens eine Lichtquelle (30) und das Licht der Lichtquelle empfangende und führende Lichtführungsmittel (35) umfasst;
**dadurch gekennzeichnet, dass** die Lichtführungsmittel (35) durch einen einzelnen Lichtleiter (35) definiert sind, der sich entlang einer gekrümmten in der Nähe der Vorrichtungen (16, 17, 14, 25, 26, 10) verlaufenden Lichtführungsbahn erstreckt und eine Vielzahl von Zwischenbereichen (39, 40, 41, 42, 43, 44) umfasst, die entlang der Lichtführungsbahn ausgerichtet sind, wobei jeder Bereich das geführte Licht in Richtung von mindestens einer entsprechenden Vorrichtung (16, 17, 14, 25, 26, 10) radial abstrahlt.

2. Eine Tür nach Anspruch 1, **dadurch gekennzeichnet, dass** die Lichtquelle (30) eine LED Lichtquelle ist.

3. Eine Tür nach den Ansprüchen 1 oder 2, **dadurch gekennzeichnet, dass** sie zwei Lichtquellen (30) umfasst, die an sich gegenüberliegenden Enden (37) befestigt sind.

4. Eine Tür nach einem der vorangegangenen Ansprüche, **dadurch gekennzeichnet, dass** die Lichtführungsmittel (35) mindestens einen zweiten Bereich (43) umfassen, der sich über einen Bodenbereich des Innenpaneels (6) erstreckt und im Einsatz, bei geöffneter Tür (4), die Straßenoberfläche, und bei geschlossener Tür, einen durch den Boden (3) des Fahrzeugs (1) begrenzten Bereich beleuchtet.

5. Eine Tür nach einem der vorangegangenen Ansprüche, **dadurch gekennzeichnet, dass** das Innenpaneel (6) ein Staufach (10) einschließt, wobei die Lichtführungsmittel (35) mindestens einen dritten Bereich (44) umfassen, der sich in der Nähe eines Bereiches (27) erstreckt, der das Staufach (10) begrenzt.

6. Eine Tür nach einem der vorangegangenen Ansprüche, **dadurch gekennzeichnet, dass** sie einen hinteren lichtdurchlässigen Bereich (25) umfasst, der außen auf eine offene Tür hinweist, wobei die Lichtführungsmittel (35) mindestens einen vierten Bereich (42) aufweisen, der sich in der Nähe des hinteren Bereichs (25) erstreckt.

7. Eine Tür nach einem der vorangegangenen Ansprüche, **dadurch gekennzeichnet, dass** sie ein Innengriffstück (17) einschließt, wobei die Lichtführungsmittel (35) mindestens einen fünften Bereich (40) angrenzend dem Griffstück (17) umfassen.

8. Eine Tür nach einem der vorangegangenen Ansprüche, **dadurch gekennzeichnet, dass** die Steuerungsmittel (16) mit einem reflektierenden Material beschichtet sind.

9. Eine Tür nach einem der vorangegangenen Ansprüche, **dadurch gekennzeichnet, dass** sich die Lichtführungsmittel (35) entlang einer im Wesentlichen ringförmigen Bahn erstrecken.

10. Ein Fahrzeug (1), insbesondere ein Motorfahrzeug, **dadurch gekennzeichnet, dass** es eine Tür (4) umfasst, die nach einem der vorangegangenen Ansprüche gefertigt ist.

## Revendications

1. Porte pour véhicule (1), en particulier pour véhicule à moteur, comportant :
- une carrosserie extérieure (5) ;
- un panneau intérieur (6) ;
- de nombreux dispositifs à éclairer (16, 17, 14, 25, 26, 10), portés par le panneau (6), disposés dans des emplacements respectifs le long du panneau (6) et comportant des moyens de commande (16) utilisables pour la commande des fonctions relatives au véhicule (1) ; et
- des moyens d'éclairage (29) pour éclairer les dispositifs (16, 17, 14, 25, 26, 10), ces moyens d'éclairage (29) intégrant au moins une source lumineuse (30) ainsi que des moyens de conduite de la lumière (35) recevant la lumière de ces sources lumineuses (30) et conduisant la lumière reçue ;
**caractérisée en ce que** le moyen de conduite de la lumière (35) est constitué d'un conducteur de lumière unique (35), qui s'allonge le long d'un chemin de conduite de la lumière curviligne s'étendant de manière adjacente par rapport à ces dispositifs (16, 17, 14, 25, 26, 10) et comprenant plusieurs parties intermédiaires (39, 40, 41, 42, 43, 44) alignées le long de ce chemin de conduite de la lumière dont chacune émet respectivement la lumière conduite en sens radial vers au moins un dispositif (16, 17, 14, 25, 26, 10).

2. Porte selon la revendication 1, **caractérisée en ce que** la source lumineuse (30) intègre une source lumineuse DEL.

3. Porte selon la revendication 1 ou la revendication 2, **caractérisée en ce qu'**elle intègre deux sources lumineuses (30) fixées aux extrémités opposées (37) de ce moyen de conduite de la lumière (35).

4. Porte selon l'une quelconque des revendications précédentes, **caractérisée en ce que** le moyen de conduite de la lumière (35) intègre au moins une deuxième partie (43) s'étendant à travers une partie inférieure du panneau (6) pour éclairer, en fonctionnement, la surface de la route lorsque la porte (4) est ouverte, et une région délimitée par le plancher (3) du véhicule (1) lorsque la porte est fermée.

5. Porte selon l'une quelconque des revendications précédentes, **caractérisée en ce que** le panneau (6) intègre un vide-poches (10), et que le moyen de conduite de la lumière (35) comporte au moins une troisième partie (44) qui s'étend de manière adjacente à une zone (27) délimitant le vide-poches (10).

6. Porte selon l'une quelconque des revendications précédentes, **caractérisée en ce qu'**elle intègre une partie arrière perméable à la lumière (25) pour signaler, hors du véhicule (1), que la porte (4) est ouverte ; le moyen de conduite de la lumière (35) intègre au moins une quatrième partie (42) qui s'étend de manière adjacente à la partie arrière (25).

7. Porte selon l'une quelconque des revendications précédentes, **caractérisée en ce qu'**elle intègre une poignée intérieure (17) ; le moyen de conduite de la lumière (35) intègre au moins une cinquième partie (40) adjacente à la poignée (17).

8. Porte selon l'une quelconque des revendications précédentes, **caractérisée en ce que** le moyen de commande (16) intègre des commutateurs (16) revêtus d'un matériau réfléchissant.

9. Porte selon l'une quelconque des revendications précédentes, **caractérisée en ce que** le moyen de conduite de la lumière (35) s'étend le long d'un chemin essentiellement annulaire.

10. Véhicule (1), en particulier véhicule à moteur, **caractérisé en ce qu'**il intègre une porte (4) fabriquée selon l'une des précédentes revendications.
